(19) Europäisches Patentamt / European Patent Office / Office européen des brevets

(11) **EP 4 453 618 B1**

(12) **EUROPEAN PATENT SPECIFICATION**

(45) Date of publication and mention
of the grant of the patent:
**07.05.2025 Bulletin 2025/19**

(21) Application number: **22851236.4**

(22) Date of filing: **21.12.2022**

(51) International Patent Classification (IPC):
*G01V 1/30* (2006.01)    *G01V 1/50* (2006.01)

(52) Cooperative Patent Classification (CPC):
**G01V 1/306; G01V 1/305; G01V 1/50;**
G01V 2210/6222; G01V 2210/624

(86) International application number:
**PCT/US2022/053654**

(87) International publication number:
**WO 2023/122175 (29.06.2023 Gazette 2023/26)**

(54) **A METHOD OF MODELING STONELEY DISPERSION**

VERFAHREN ZUR MODELLIERUNG EINER STONELEY-DISPERSION

PROCÉDÉ DE MODÉLISATION D'UNE DISPERSION DE STONELEY

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.12.2021 CN 202111603335**
**12.01.2022 US 202217647792**

(43) Date of publication of application:
**30.10.2024 Bulletin 2024/44**

(73) Proprietor: **Saudi Arabian Oil Company**
**Dhahran, 31311 (SA)**

(72) Inventors:
• **SUN, Xuekai**
  **Beijing 100102 (CN)**
• **AYADIUNO, Christopher**
  **Dhahran, 31311 (SA)**

(74) Representative: **Osha BWB**
**2, rue de la Paix**
**75002 Paris (FR)**

(56) References cited:
**WO-A1-2017/051242    US-A1- 2006 120 217**
**US-B2- 10 670 761**

• **SUN XUEKAI ET AL: "Imaging near wellbore fractures by using Stoneley wave", SECOND INTERNATIONAL MEETING FOR APPLIED GEOSCIENCE & ENERGY, 15 August 2022 (2022-08-15), pages 257 - 261, XP093031802, Retrieved from the Internet <URL:http://dx.doi.org/10.1190/image2022-3740415.1> DOI: 10.1190/image2022-3740415.1**

**Description**

BACKGROUND

When acoustic waves are emitted from within a well that accesses a hydrocarbon reservoir, the acoustic waves may disperse into various frequencies each of which travel at different velocities. It may be useful to characterize dispersion of a particular acoustic wave, namely Stoneley waves, that travel along the well-rock interface. Stoneley wave dispersion may provide insight into if fractures exist along the well, which may be useful as the fractures may affect hydrocarbon recovery. Further, Stoneley wave dispersion may provide insight into rock properties, such as rock permeability and porosity, that neighbor the well. Rock properties may be identified as characteristic of prolific portions of the hydrocarbon reservoir and aid in planning and drilling an offset well.

SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, the invention relates to a method of modeling a set of dispersion curves. The method includes obtaining an acoustic dataset along a well that accesses a hydrocarbon reservoir. The method further includes determining a set of depth windows along the well and determining a first subset of dispersion curves for a first subset of depth windows using a dispersion model. The method still further includes initializing a second subset of dispersion curves for a second subset of depth windows using a nearest neighbor search of the first subset of dispersion curves. The method still further includes determining slowness-frequency pairs for the second subset of depth windows using the acoustic dataset and updating the second subset of dispersion curves using a recursive scanning method. The method still further includes characterizing rock properties near the well based, at least in part, on the first subset of dispersion curves and the second subset of dispersion curves.

The prior art US 10 670 761 relates to methods and systems for modeling dispersion curves obtained from acoustic datasets.

In a further aspect, the invention relates to a non-transitory computer readable medium storing instructions executable by a computer processor. The instructions include functionality for receiving an acoustic dataset along a well that accesses a hydrocarbon reservoir. The instructions further include determining a set of depth windows along the well and determining a first subset of dispersion curves for a first subset of depth windows using a dispersion model. The instructions still further include initializing a second subset of dispersion curves for a second subset of depth windows using a nearest neighbor search of the first subset of dispersion curves. The instructions still further include determining slowness-frequency pairs for the second subset of depth windows using the acoustic dataset and updating the second subset of dispersion curves using a recursive scanning method. The instructions still further include characterizing rock properties near the well based, at least in part, on the first subset of dispersion curves and the second subset of dispersion curves.

In a further aspect, the invention relates to a system including an acoustic tool configured to collect an acoustic dataset and a computer system configured to receive an acoustic dataset along a well that accesses a hydrocarbon reservoir. The computer system is further configured to determine a set of depth windows along the well and determine a first subset of dispersion curves for a first subset of depth windows using a dispersion model. The computer system is still further configured to initialize a second subset of dispersion curves for a second subset of depth windows using a nearest neighbor search of the first subset of dispersion curves. The computer system is still further configured to determine slowness-frequency pairs for the second subset of depth windows using the acoustic dataset and update the second subset of dispersion curves using a recursive scanning method. The computer system is still further configured to characterize rock properties near the well based, at least in part, on the first subset of dispersion curves and the second subset of dispersion curves.

Other aspects and advantages of the claimed subject matter will be apparent from the following description and the appended claims.

BRIEF DESCRIPTION OF DRAWINGS

Specific embodiments of the disclosed technology will now be described in detail with reference to the accompanying figures. Like elements in the various figures are denoted by like reference numerals for consistency.

FIG. 1A depicts a well in accordance with one or more embodiments.

FIG. 1B depicts an acoustic tool in accordance with one or more embodiments.

FIG. 2A shows a dispersion curve in accordance with one or more embodiments.

FIG. 2B shows a log and a well in accordance with one or more embodiments.

FIG. 3 shows a flowchart in accordance with one or more embodiments.

FIG. 4 depicts a recursive scanning method in accordance with one or more embodiments.

FIG. 5 depicts a computer system in accordance with one or more embodiments.

DETAILED DESCRIPTION

In the following detailed description of embodiments of the disclosure, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description.

Throughout the application, ordinal numbers (*e.g.,* first, second, third, *etc.*) may be used as an adjective for an element (*i.e.,* any noun in the application). The use of ordinal numbers is not to imply or create any particular ordering of the elements nor to limit any element to being only a single element unless expressly disclosed, such as using the terms "before," "after," "single," and other such terminology. Rather, the use of ordinal numbers is to distinguish between the elements. By way of an example, a first element is distinct from a second element, and the first element may encompass more than one element and succeed (or precede) the second element in an ordering of elements.

It is to be understood that the singular forms "a," "an," and "the" include plural referents unless the context clearly dictates otherwise. Thus, for example, reference to "a dispersion curve" includes reference to one or more of such curves.

It is to be understood that one or more of the steps shown in the flowchart may be omitted, repeated, and/or performed in a different order than the order shown. Accordingly, the scope disclosed herein should not be considered limited to the specific arrangement of steps shown in the flowchart.

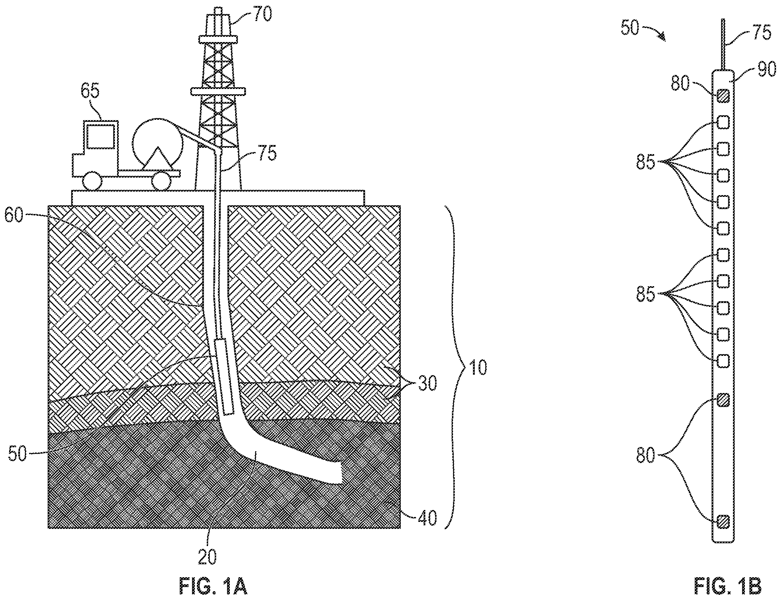

In the following description of FIGs. 1-5, any component described regarding a figure, in various embodiments disclosed herein, may be equivalent to one or more like-named components described regarding any other figure. For brevity, descriptions of these components will not be repeated regarding each figure. Thus, each and every embodiment of the components of each figure is incorporated by reference and assumed to be optionally present within every other figure having one or more like-named components. Additionally, in accordance with various embodiments disclosed herein, any description of the components of a figure is to be interpreted as an optional embodiment which may be implemented in addition to, in conjunction with, or in place of the embodiments described regarding a corresponding like-named component in any other figure.

FIG. 1A depicts a subterranean region (10) that contains a well (20). The well (20) may traverse various rock formations (30) (hereinafter also "rock" and "formation") that may include cap rock to ultimately penetrate a hydrocarbon reservoir (40). Acoustic tools (50) may be lowered into a well (20) to acquire acoustic properties of the well (20), the fluid-rock interface (60) (hereinafter also "well-rock interface"), and/or the rock formation (30) surrounding the well (20) in the subterranean region (10). An acoustic tool (50) may be supported by a truck (65) and derrick (70) above ground where the truck (65) attached to a conveyance mechanism (75) is used to lower the acoustic tool (50) into the well (20). The conveyance mechanism (75) may be wireline, a coiled tubing, or a drillpipe that may include means to provide power to the acoustic tool (50) and a telemetry channel from the acoustic tool (50) to the surface.

FIG. 1B depicts an acoustic tool (50), in accordance with one or more embodiments. In general, acoustic tools (50) include at least one source (80) and an array of receivers (85). In the embodiment shown in FIG. 1B, the acoustic tool (50) includes a plurality of sources (80) and a plurality of evenly spaced receivers (85) mounted to a pipe (90) that is attached to the conveyance mechanism (75). In other embodiments, the receivers (85) may be unevenly spaced. Further, although ten receivers (85) are shown in FIG. 1B, in some embodiments there may be a greater or lesser number of receivers (85).

Each source (80) on the acoustic tool (50) emits acoustic waves into the rock formation (30) surrounding the well (20). Each source (80) may be a monopole, a dipole, or a quadrupole individually or in any combination. A monopole emits acoustic waves radially or in every direction equally while a dipole emits acoustic waves in a single direction. Further, a quadrupole consists of two dipoles oriented opposite to one another. Acoustic tools (50) may be used after a well (20) has been drilled or during the drilling of the well (20). The acoustic tool (50) may be moved to hundreds or thousands of source activation locations where acoustic waves are generated by a source (80) at each activation location.

Four types of acoustic waves may radiate away from the source (80) from which the acoustic waves are emitted.

Compressional waves (hereinafter P-waves) propagate through rock (30) and well fluid while oscillating parallel to the propagation direction and are the fastest of the acoustic wave types. Shear waves (hereinafter S-waves) propagate through rock (30) while oscillating perpendicular to the propagation direction. The remaining two types of acoustic waves propagate along the fluid-rock interface (60) of the well (20). First, Rayleigh waves oscillate elliptically while propagating along the fluid-rock interface (60) of the well (20). Second, tube or Stoneley waves oscillate perpendicular to the propagation direction along the fluid-rock interface (60) of the well (20). Stoneley waves are the slowest of the acoustic wave types and present larger amplitudes and lower frequencies relative to the other acoustic wave types.

As the various types of acoustic waves travel away from the source (80), the acoustic waves may disperse. Acoustic dispersion is the phenomenon where acoustic waves separate into constituent frequencies each with a distinct velocity or slowness, where slowness is the reciprocal of velocity. A well-known example of light dispersion is white light dispersing into constituent colors. Returning to acoustic dispersion, Stoneley wave dispersion is of particular interest as Stoneley wave dispersion may be a function of rock properties such as petrophysical properties and rock mechanics. Specifically, rock properties may include, without limitation, porosity, permeability, and fracture. As such, quantifying Stoneley wave dispersion may provide insight into if fractures along the fluid-rock interface (60) of a well (20) exist and, if so, what size the fractures are. Further, specific rock properties may be identified as being characteristic of productive portions of a hydrocarbon reservoir (40).

Returning to FIG. 1B, some of the acoustic waves that are emitted from a source (80) may ultimately be received by the array of receivers (85) on the acoustic tool (50). The received waves are recorded as a time-series of acoustic waves in amplitude called "waveforms." A set of waveforms recorded for a set of activation locations is denoted an "acoustic dataset." The acoustic dataset may then be processed. If frequency content is of interest, a Fourier transform may be applied to the acoustic dataset. Other methods of determining the frequency content of an acoustic dataset may be apparent to one skilled in the art. Further, the acoustic dataset may be processed to determine an acoustic log (hereinafter also "log"), which may or may not be separated by acoustic wave type. Acoustic datasets may be processed to provide a velocity log or a slowness log, for example, using a plurality of processing techniques such as slowness time coherence analysis and radial tomography methods. A person of ordinary skill in the art will appreciate other processing techniques may also be used to calculate acoustic logs as described herein. A plurality of processing techniques may then be used to determine slowness-frequency pairs at a plurality of frequencies and depths along a well (20).

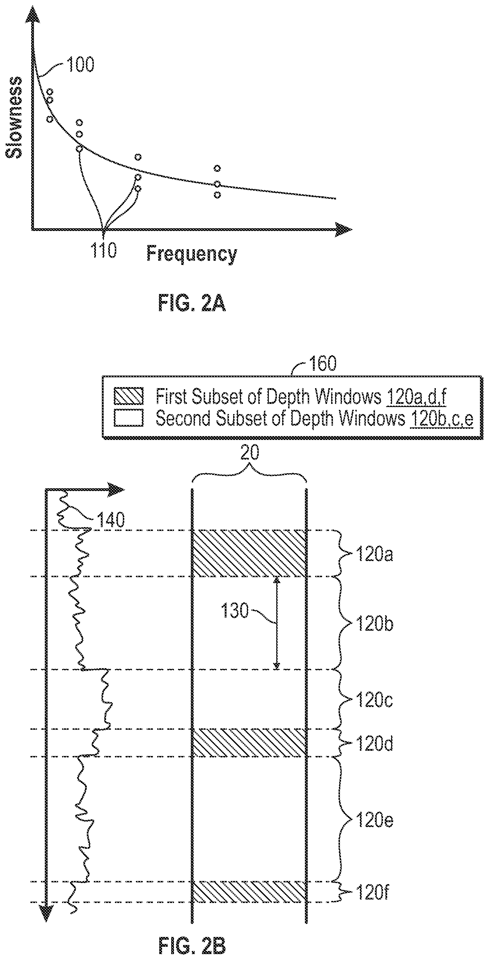

FIG. 2A depicts an exemplary Stoneley wave dispersion curve (100) in accordance with one or more embodiments where slowness and frequency are inversely proportional. In other words, the acoustic waves decrease in slowness or travel faster as acoustic wave frequency increases. The Stoneley wave dispersion curve (100) (hereinafter also "dispersion curve") may be based on a theoretical dispersion model, an empirical dispersion model that uses Stoneley wave slowness-frequency pairs (110) determined from waveforms, or a combination of both types of models. One theoretical dispersion model is proposed by Tang and Cheng ("Effects of a logging tool on the Stoneley waves in elastic and porous boreholes." The Log Analyst 34.05 (1993)). The theoretical dispersion model is modified from the Biot-Rosenbaum model based on neighboring rock property assumptions, well diameter assumptions, and acoustic tool assumptions to theoretically model Stoneley wave dispersion curves (100). The frequency of Stoneley waves may be modeled by:

$$\int_{-\infty}^{\infty} \left( \frac{N}{\Delta} e^{ikz} \right)_{Stoneley} dk = 2\pi i \left( \frac{N(k,\omega)}{\frac{\partial \Delta}{\partial k}} e^{ikz} \right)_{Stoneley}, \quad \text{Equation (1)}$$

where z is the distance along the depth of a well (20) a receiver (85) is away from the source (80),

$$\Delta = I_0(fR) + \frac{I_1(fa)}{K_1(fa)} K_0(fR) - \left[ I_1(fR) - \frac{I_1(fa)}{K_1(fa)} K_1(fR) \right] \times \frac{f\rho}{\rho_f l} \left\{ \frac{2V_s^2 lm}{k^2 c^2} \left[ \frac{1}{mR} + \frac{2V_s^2 K_0(mR)}{c^2 K_1(mR)} \right] - \left( \frac{2V_s^2}{c^2} - 1 \right)^2 \frac{K_0(lR)}{K_1(lR)} \right\}, \quad \text{Equation (2)}$$

and

$$N(k,\omega) = K_0(fa)I_0(fR) - I_0(fa)K_0(fR) - \frac{I_0(fR)+\frac{I_1(fa)}{K_1(fa)}K_0(fR)}{I_0(fR)-\frac{I_1(fa)}{K_1(fa)}K_1(fR)}[K_1(fR)I_0(fa) +$$

$$K_0(fa)I_1(fR)]. \qquad \text{Equation (3)}$$

Here $I_n$ and $K_n$ ($n = 0, 1$) are first and second kind modified Bessel functions, f, l, and m are radial wavenumbers, R is the radius of the well (20), $a$ is the radius of the acoustic tool (50), $\rho$ is the density of neighboring rock (30), $\rho_f$ is the density of fluid within the well (20), $V_s$ is the velocity of S-waves, k is the wavenumber of the Stoneley wave along the fluid-rock interface (60) of the well (20), and c equals angular frequency $\omega$ divided by k and is the phase velocity of the waves that exist in the presence of the acoustic tool (50). The velocity $c_{ST}$ of Stoneley waves may be modeled by:

$$c_{ST} = \frac{\omega}{Re(k)}, \qquad \text{Equation (4)}$$

where $Re(k)$ are the real solutions of the wavenumber k, which may be iteratively solved for using a numerical root finding procedure.

A dispersion curve (100) may be modeled for each depth window within a set of depth windows (120a-f) along the depth of a well (20) as depicted in FIG. 2B, in accordance with one or more embodiments. In these embodiments, a vertical portion of a well (20) is shown with six depth windows (120a-f) of various depths (130). While each depth window may be defined by the same depth (130), it may be useful to define the depth (130) of each depth window by different depths (130) based on a continuity within one or more logs (140), in some embodiments. How log continuity is defined, if it is defined at all, should in no way limit the scope of the disclosed invention described herein. However, by way of example, in FIG. 2B, the depth (130) of each depth window is based on the continuity of a caliper log (140), which shows the diameter of the well (20) along the abscissa relative to the depth of the well (20). A continuity threshold may be defined such that all diameters within each depth window are above or below a pre-defined continuity threshold. Alternatively, a continuity range may be defined such that all diameters within a depth window are within a pre-defined continuity range. Alternatively still, a continuity threshold difference or continuity threshold difference ratio may be defined such that all diameter differences within a depth window are above or below the continuity threshold difference or continuity threshold difference ratio. One or more of these embodiments of continuity may also be applied to another log, such as a P-wave velocity log or an S-wave velocity log, or a plurality of logs.

Though a dispersion model may accurately model Stoneley wave dispersion curves (100), it may be computationally expensive to apply a dispersion model to each depth window along the depth of a well (20). As such, it may be advantageous to only model Stoneley wave dispersion curves (100) for a first subset of depth windows (120a,d,f) along the depth of a well (20) using a dispersion model, then interpolate and refine the Stoneley wave dispersion curves (100) for a second subset of depth windows (120b,c,e) to ultimately model Stoneley wave dispersion curves (100) for the set of depth windows (120a-f) within a well (20) as shown by the key (160) in FIG. 2B.

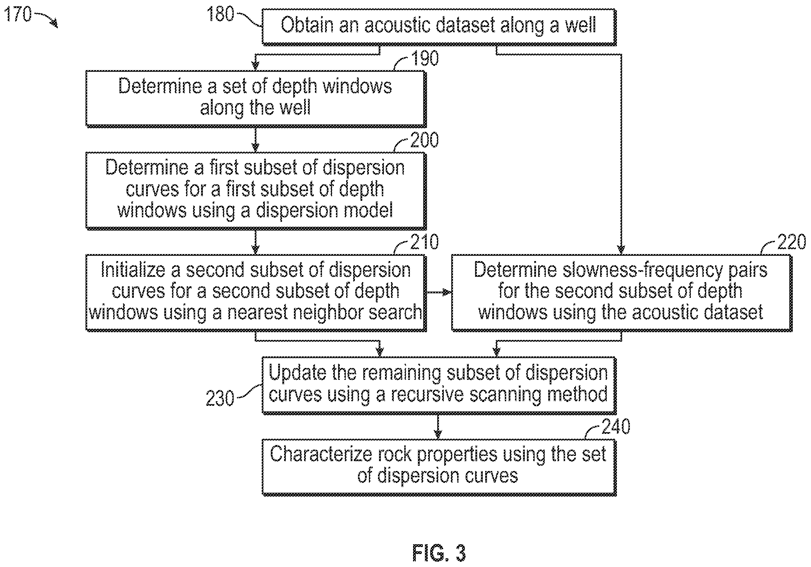

FIG. 3 shows a flowchart of a method (170) for modeling a set of Stoneley wave dispersion curves (100) for a set of depth windows (120a-f) along the depth of a well (20) using a combination of theoretical dispersion modeling and empirical dispersion modeling. In step 180, an acoustic dataset is obtained along the depth of a well (20) using an acoustic tool (50) as previously described in FIGs. 1A and 1B. The acoustic dataset may contain acoustic waves recorded as a time-series in amplitude, called waveforms, for each receiver (85) on the acoustic tool (50). The acoustic dataset may contain a large number of waveforms as 8 to 13 waveforms may be recorded, one per receiver, for each of hundreds or thousands of activation locations.

In step 190, a set of depth windows (120a-f) along the depth of a well (20) are determined. The depth (130) of each depth window may be dependent on a log continuity as previously described in FIG. 2B. However, the depth (130) of each depth window may not be dependent on a log or may be dependent on other data, such as rock core samples. The method used to determine the set of depth windows should in no way limit the scope of the invention presented herein.

In step 200, a dispersion curve (100) for each depth window within a first subset of depth windows (120a,d,f) is determined using a dispersion model to determine a first subset of dispersion curves. The number of depth windows within the first subset of depth windows (120a,d,f) may be determined based, at least in part, on reducing computational cost relative to if a dispersion curve (100) for the set of depth windows (120a-f) was determined using a dispersion model, in some embodiments. In other embodiments, the number of depth windows within the first subset of depth windows (120a,d,f) may be determined based, at least in part, on a log discontinuity between depth windows within the set of depth windows (120a-f). How the number of depth windows within the first subset of depth windows (120a,d,f) is determined should in no way limit the scope of the invention. Further, as previously mentioned in FIG. 2A, the dispersion model may be a theoretical dispersion model, an empirical dispersion model, or a combination of both.

In step 210, a dispersion curve (100) for each depth window within a second subset of depth windows (120b,c,e) is initialized by applying a nearest neighbor search to the first subset of dispersion curves determined in step 200 to determine a second subset of dispersion curves. A person of ordinary skill in the art will appreciate the plurality of nearest neighbor searches available. For example, in reference to FIG. 2B, a dispersion curve (100) for depth window 120b may be initialized using an exact linear nearest neighbor search. In this case the dispersion curve (100) for depth window 120a determined in step 200 may be the dispersion curve (100) initialized for depth window 120b. In another embodiment, a dispersion curve (100) for depth window 120c may be initialized using an approximate nearest neighbor search. In this case the dispersion curve (100) for depth window 120a or the dispersion curve (100) for depth window 120d determined in step 200 may be the dispersion curve (100) initialized for depth window 120c. The choice between the dispersion curve (100) for depth window 120a and the dispersion curve (100) for depth window 120d may be based, at least in part, on computational efficiency. In yet another embodiment, a dispersion curve (100) initialized for depth window 120e may be a combination of the dispersion curve (100) for depth window 120d and the dispersion curve (100) for depth window 120f determined in step 200. Further, different nearest neighbor searches may be selected to initialize different dispersion curves (100) within the second subset of depth windows (120b,c,e).

In step 220, Stoneley wave slowness-frequency pairs (110) (hereinafter also "slowness-frequency pairs") are determined within each depth window within the second subset of depth windows (120b,c,e) using the acoustic dataset. The method(s) used to process the acoustic dataset to determine the slowness-frequency pairs should in no way limit the scope of the invention presented herein.

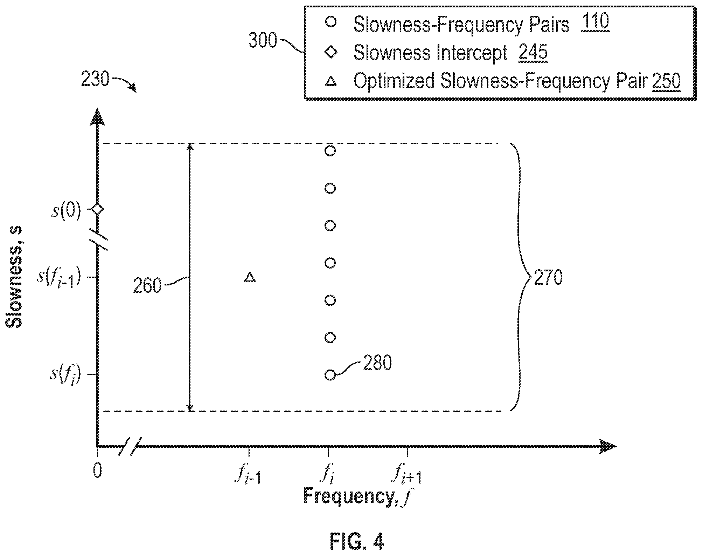

In step 230, each dispersion curve (100) within the second subset of depth windows (120b,c,e) initialized in step 210 is iteratively refined using a recursive scanning method. FIG. 4 depicts the recursive scanning method, in accordance with one or more embodiments, where the abscissa represents frequency, $f$, and the ordinate represents slowness, $s$. Seven slowness-frequency pairs (110) determined in step 220 at frequency $f_i$ are presented. Further, the slowness intercept (245), $s(0)$, from the dispersion curve initialized in step 210 and a previously optimized slowness-frequency pair (250) at a frequency $f_{i-1}$ are presented as shown by the key (300). The previously optimized slowness-frequency pair (250) may or may not have been optimized using the recursive scanning method.

In some embodiments, the size (260) of a slowness window (270) may be determined using the slowness intercept (245), $s(0)$, and the previously optimized slowness, $s(f_{i-1})$, from the previously optimized slowness-frequency pair (250). For example, the size (260) of the slowness window (270) may be:

$$s(f_{i-1}) \pm 2|s(f_{i-1}) - s(0)|. \qquad \text{Equation (5)}$$

where the slowness window (270) is centered at $s(f_{i-1})$ and, on either side of $s(f_{i-1})$, is twice the difference between the slowness intercept (245), $s(0)$, and the previously optimized slowness, $s(f_{i-1})$, from the previously optimized slowness-frequency pair (250). In other embodiments, other optimized slownesses, initial slownesses determined in step 210, or slowness-frequency pairs determined from the acoustic dataset in step 220 may be used to determine the size (260) of the slowness window (270). Further, while a multiple of two is presented in Equation (5), any other multiple could be used. The slownesses and multiples used to determine the center and size (260) of the slowness window (270) should in no way limit the scope of the invention presented herein. Returning to the recursive scanning method shown in FIG. 4, the minimum slowness (280) of the slowness-frequency pairs (110) at frequency $f_i$ that reside within the slowness window (270) becomes the optimized slowness at frequency $f_i$.

The same steps are then repeated for the frequency $f_{i+1}$. Now the size of the slowness window for frequency $f_{i+1}$ may be:

$$s(f_i) \pm 2|s(f_i) - s(0)|, \qquad \text{Equation (6)}$$

and the minimum slowness of the slowness-frequency pairs at frequency $f_{i+1}$ that reside within the slowness window (neither of which are shown) becomes the optimized slowness at frequency $f_{i+1}$.

The recursive scanning method presented in step 230 may be repeated for a plurality of frequencies within each dispersion curve within the second subset of dispersion curves. Further, the recursive scanning method may be repeated multiple times for one frequency within a dispersion curve. In some embodiments, the number of times the recursive scanning method is applied may be based on a slowness window threshold size. The number of frequencies for which the recursive scanning method is applied to should in no way limit the scope of the invention presented herein. Further, the number of times the recursive scanning method is applied to one frequency should in no way limit the scope of the invention presented herein. Following completion of step 230 as presented in FIG. 3, a set of Stoneley wave dispersion curves (from hereinafter also a "set of dispersion curves") have been determined for the first subset of depth windows (120a,d,f) and the second subset of depth windows (120b,c,e) along the depth of the well (20).

In step 240, rock properties are characterized using the set of Stoneley wave dispersion curves. For example, rock porosity and rock permeability may be characterized using the set of dispersion curves both of which may be identified as characteristic of prolific portions of a hydrocarbon reservoir (40) and an offset well drilled to access those prolific portions. In other embodiments, the set of dispersion curves may characterize rock mechanics, specifically rock fracture. Rock fracture may aid in determining where fractures along the depth of the well (20) exist and what size the fractures are. Well completion strategies may then be planned based, at least in part, on the rock fracture information to extend the life of the well (20) and increase its cumulative hydrocarbon production.

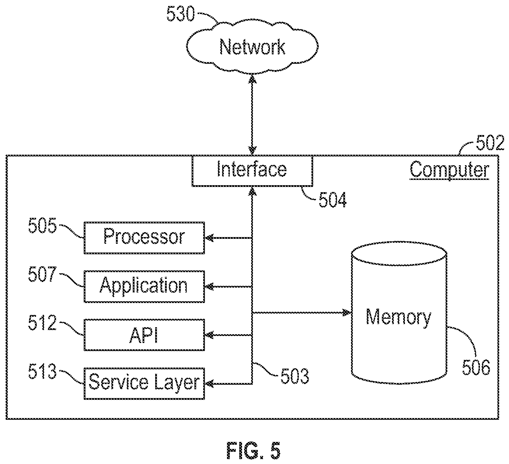

FIG. 5 depicts a block diagram of a computer system (502) used to provide computational functionalities associated with described algorithms, methods, functions, processes, flows, and procedures as described in this disclosure, according to one or more embodiments. The illustrated computer (502) is intended to encompass any computing device such as a server, desktop computer, laptop/notebook computer, wireless data port, smart phone, personal data assistant (PDA), tablet computing device, one or more processors within these devices, or any other suitable processing device, including both physical or virtual instances (or both) of the computing device. Additionally, the computer (502) may include a computer that includes an input device, such as a keypad, keyboard, touch screen, or other device that can accept user information, and an output device that conveys information associated with the operation of the computer (502), including digital data, visual, or audio information (or a combination of information), or a GUI.

The computer (502) can serve in a role as a client, network component, a server, a database or other persistency, or any other component (or a combination of roles) of a computer system for performing the subject matter described in the instant disclosure. The illustrated computer (502) is communicably coupled with a network (530). In some implementations, one or more components of the computer (502) may be configured to operate within environments, including cloud-computing-based, local, global, or other environment (or a combination of environments).

At a high level, the computer (502) is an electronic computing device operable to receive, transmit, process, store, or manage data and information associated with the described subject matter. According to some implementations, the computer (502) may also include or be communicably coupled with an application server, e-mail server, web server, caching server, streaming data server, business intelligence (BI) server, or other server (or a combination of servers).

The computer (502) can receive requests over network (530) from a client application (for example, executing on another computer (502)) and responding to the received requests by processing the said requests in an appropriate software application. In addition, requests may also be sent to the computer (502) from internal users (for example, from a command console or by other appropriate access method), external or third-parties, other automated applications, as well as any other appropriate entities, individuals, systems, or computers.

Each of the components of the computer (502) can communicate using a system bus (503). In some implementations, any or all of the components of the computer (502), both hardware or software (or a combination of hardware and software), may interface with each other or the interface (504) (or a combination of both) over the system bus (503) using an application programming interface (API) (512) or a service layer (513) (or a combination of the API (512) and service layer (513). The API (512) may include specifications for routines, data structures, and object classes. The API (512) may be either computer-language independent or dependent and refer to a complete interface, a single function, or even a set of APIs. The service layer (513) provides software services to the computer (502) or other components (whether or not illustrated) that are communicably coupled to the computer (502). The functionality of the computer (502) may be accessible for all service consumers using this service layer. Software services, such as those provided by the service layer (513), provide reusable, defined business functionalities through a defined interface. For example, the interface may be software written in JAVA, C++, or other suitable language providing data in extensible markup language (XML) format or another suitable format. While illustrated as an integrated component of the computer (502), alternative implementations may illustrate the API (512) or the service layer (513) as stand-alone components in relation to other components of the computer (502) or other components (whether or not illustrated) that are communicably coupled to the computer (502). Moreover, any or all parts of the API (512) or the service layer (513) may be implemented as child or sub-modules of another software module, enterprise application, or hardware module without departing from the scope of this disclosure.

The computer (502) includes an interface (504). Although illustrated as a single interface (504) in FIG. 5, two or more interfaces (504) may be used according to particular needs, desires, or particular implementations of the computer (502). The interface (504) is used by the computer (502) for communicating with other systems in a distributed environment that are connected to the network (530). Generally, the interface (504) includes logic encoded in software or hardware (or a combination of software and hardware) and operable to communicate with the network (530). More specifically, the interface (504) may include software supporting one or more communication protocols associated with communications such that the network (530) or interface's hardware is operable to communicate physical signals within and outside of the illustrated computer (502).

The computer (502) includes at least one computer processor (505). Although illustrated as a single computer processor (505) in FIG. 5, two or more processors may be used according to particular needs, desires, or particular implementations of the computer (502). Generally, the computer processor (505) executes instructions and manipulates data to perform the operations of the computer (502) and any algorithms, methods, functions, processes, flows, and procedures as described in the instant disclosure.

The computer (502) also includes a memory (506) that holds data for the computer (502) or other components (or a combination of both) that can be connected to the network (530). For example, memory (506) can be a database storing data consistent with this disclosure. Although illustrated as a single memory (506) in FIG. 5, two or more memories may be used according to particular needs, desires, or particular implementations of the computer (502) and the described functionality. While memory (506) is illustrated as an integral component of the computer (502), in alternative implementations, memory (506) can be external to the computer (502).

The application (507) is an algorithmic software engine providing functionality according to particular needs, desires, or particular implementations of the computer (502), particularly with respect to functionality described in this disclosure. For example, application (507) can serve as one or more components, modules, applications, etc. Further, although illustrated as a single application (507), the application (507) may be implemented as multiple applications (507) on the computer (502). In addition, although illustrated as integral to the computer (502), in alternative implementations, the application (507) can be external to the computer (502).

There may be any number of computers (502) associated with, or external to, a computer system containing a computer (502), wherein each computer (502) communicates over network (530). Further, the term "client," "user," and other appropriate terminology may be used interchangeably as appropriate without departing from the scope of this disclosure. Moreover, this disclosure contemplates that many users may use one computer (502), or that one user may use multiple computers (502).

Embodiments of the disclosure presented herein may reduce the computational expense of calculating a set of Stoneley wave dispersion curves for a plurality of depths along a well (20). Computational efficiency may be advantageous as Stoneley wave dispersion curves (100) may provide insight into rock petrophysical properties and rock mechanics near a well (20). Rock petrophysical properties, such as rock porosity and rock permeability, may be identified as characteristic of prolific portions of a hydrocarbon reservoir (40) and an offset well drilled to accesses those prolific portions. Further, rock mechanics, such as rock fracture, may aid in well completion strategies aimed to extend the life of the well (20) and increase its cumulative hydrocarbon production.

Although only a few example embodiments have been described in detail above, those skilled in the art will readily appreciate that many modifications are possible in the example embodiments without materially departing from this invention. The invention is defined by the following claims.

## Claims

1.    A method of modeling a set of dispersion curves comprising:

by a computer system
obtaining an acoustic dataset along a well (20) that accesses a hydrocarbon reservoir (40); and
determining a set of depth windows (120a-f) along the well (20);
determining a first subset of dispersion curves for a first subset of depth windows (120a,d,f) using a dispersion model;
the method being **characterized in** further comprising
initializing a second subset of dispersion curves for a second subset of depth windows (120b,c,e) using a nearest neighbor search of the first subset of dispersion curves;
determining slowness-frequency pairs (110) for the second subset of depth windows (120b,c,e) using the acoustic dataset;
updating the second subset of dispersion curves using a recursive scanning method, wherein the recursive scanning method comprises:

determining a slowness window (270) for a second frequency based, at least in part, on a slowness intercept (245) and a first slowness at a first frequency, and
determining a second slowness at the second frequency using a minimum slowness-frequency pair at the second frequency within the slowness window (270); and

characterizing rock properties near the well (20) based, at least in part, on the first subset of dispersion curves and the second subset of dispersion curves.

2.    The method of claim 1, further comprising:

identifying prolific portions of the hydrocarbon reservoir (40) based, at least in part, on the rock properties; and
planning and drilling an offset well to further recover the hydrocarbon reservoir (40).

3. The method of claims 1 or 2, wherein the first subset of dispersion curves and the second subset of dispersion curves represent Stoneley wave dispersions.

4. The method of any one of claims 1-3, wherein a first union of the first subset of dispersion curves and the second subset of dispersion curves is the set of dispersion curves, and wherein a second union of the first subset of depth windows (120a,d,f) and the second subset of depth windows (120b,c,e) is the set of depth windows (120a-f).

5. The method of any one of claims 1-4, wherein the dispersion model is a theoretical dispersion model.

6. The method of any one of claims 1-5, wherein the nearest neighbor search is an exact linear search.

7. The method of any one of claims 1-6, wherein the second frequency is larger than the first frequency.

8. The method of any one of claims 1-7, wherein the rock properties comprise a rock permeability.

9. A non-transitory computer readable medium storing instructions executable by a computer processor, the instructions comprising functionality for:

> receiving an acoustic dataset along a well (20) that accesses a hydrocarbon reservoir (40);
> determining a set of depth windows (120a-f) along the well (20);
> **characterized in that** the instructions comprises further functionality for:
>
> > determining a first subset of dispersion curves for a first subset of depth windows (120a,d,f) using a dispersion model;
> > initializing a second subset of dispersion curves for a second subset of depth windows (120b,c,e) using a nearest neighbor search of the first subset of dispersion curves;
> > determining slowness-frequency pairs (110) for the second subset of depth windows (120b,c,e) using the acoustic dataset;
> > updating the second subset of dispersion curves using a recursive scanning method, wherein the recursive scanning method comprises:
> >
> > > determining a slowness window (270) for a second frequency based, at least in part, on a slowness intercept (245) and a first slowness at a first frequency, and
> > > determining a second slowness at the second frequency using a minimum slowness-frequency pair at the second frequency within the slowness window (270); and
> >
> > characterizing rock properties near the well (20) based, at least in part, on the first subset of dispersion curves and the second subset of dispersion curves.

10. The non-transitory computer readable medium of claim 9, wherein the first subset of dispersion curves and the second subset of dispersion curves represent Stoneley wave dispersions, wherein a first union of the first subset of dispersion curves and the second subset of dispersion curves is a set of dispersion curves, and wherein a second union of the first subset of depth windows (120a,d,f) and the second subset of depth windows (120b,c,e) is the set of depth windows (120a-f).

11. The non-transitory computer readable medium of any one of claims 9-10, wherein the dispersion model is a theoretical dispersion model.

12. The non-transitory computer readable medium of any one of claims 9-11, wherein the nearest neighbor search is an exact linear search.

13. The non-transitory computer readable medium of any one of claims 9-12, wherein the second frequency is larger than the first frequency.

14. A system of modeling a set of dispersion curves comprising:

> an acoustic tool (50) configured to collect an acoustic dataset; and
> a computer system (502) configured to:

receive the acoustic dataset along a well (20) that accesses a hydrocarbon reservoir (40),

determine a set of depth windows (120a-f) along the well (20),

determine a first subset of dispersion curves for a first subset of depth windows (120a,d,f) using a dispersion model,

the system being **characterized in that** it is further configured to

initialize a second subset of dispersion curves for a second subset of depth windows (120b,c,e) using a nearest neighbor search of the first subset of dispersion curves,

determine slowness-frequency pairs (110) for the second subset of depth windows (120b,c,e) using the acoustic dataset,

update the second subset of dispersion curves using a recursive scanning method, wherein the recursive scanning method comprises:

determining a slowness window (270) for a second frequency based, at least in part, on a slowness intercept (245) and a first slowness at a first frequency; and

determining a second slowness at the second frequency using a minimum slowness-frequency pair at the second frequency within the slowness window (270), and

characterize rock properties near the well (20) based, at least in part, on the first subset of dispersion curves and the second subset of dispersion curves.

15. The system of claim 14, wherein the first subset of dispersion curves and the second subset of dispersion curves represent Stoneley wave dispersions, wherein a first union of the first subset of dispersion curves and the second subset of dispersion curves is the set of dispersion curves.

**Patentansprüche**

1. Ein Verfahren zum Modellieren eines Satzes von Dispersionskurven, die folgenden Schritte aufweisend:

durch ein Computersystem

Erhalten eines akustischen Datensatzes entlang eines Bohrlochs (20), das auf ein Kohlenwasserstoffreservoir (40) zugreift; und

Bestimmen eines Satzes von Tiefenfenstern (120a-f) entlang des Bohrlochs (20);

Bestimmen eines ersten Teilsatzes von Dispersionskurven für einen ersten Teilsatz von Tiefenfenstern (120a, d, f) unter Verwendung eines Dispersionsmodells;

wobei das Verfahren **dadurch gekennzeichnet ist, dass** es ferner folgende Schritte aufweist:

Initialisieren eines zweiten Teilsatzes von Dispersionskurven für einen zweiten Teilsatz von Tiefenfenstern (120b, c, e) unter Verwendung einer Suche nach dem nächsten Nachbarn des ersten Teilsatzes von Dispersionskurven;

Bestimmen von Langsamkeits-Frequenz-Paaren (110) für den zweiten Teilsatz von Tiefenfenstern (120b, c, e) unter Verwendung des akustischen Datensatzes;

Aktualisieren des zweiten Teilsatzes von Dispersionskurven unter Verwendung eines rekursiven Scanverfahrens, wobei das rekursive Scanverfahren folgende Schritte aufweist:

Bestimmen eines Langsamkeitsfensters (270) für eine zweite Frequenz, das zumindest teilweise auf einem Langsamkeitsabschnitt (245) und einer ersten Langsamkeit bei einer ersten Frequenz basiert, und

Bestimmen einer zweiten Langsamkeit bei der zweiten Frequenz unter Verwendung eines minimalen Langsamkeits-Frequenz-Paares bei der zweiten Frequenz innerhalb des Langsamkeitsfensters (270); und

Charakterisieren von Gesteinseigenschaften in der Nähe des Bohrlochs (20), basierend zumindest teilweise auf dem ersten Teilsatz von Dispersionskurven und dem zweiten Teilsatz von Dispersionskurven.

2. Das Verfahren nach Anspruch 1, ferner aufweisend:

Identifizieren von ertragreichen Teilen des Kohlenwasserstoffreservoirs (40), basierend zumindest teilweise auf den Gesteinseigenschaften; und

Planen und Bohren eines versetzten Bohrlochs, um das Kohlenwasserstoffreservoir (40) ferner zurückzugewinnen.

3. Das Verfahren nach Anspruch 1 oder 2, wobei der erste Teilsatz von Dispersionskurven und der zweite Teilsatz von Dispersionskurven Stoneley-Wellendispersionen repräsentieren.

4. Das Verfahren nach einem der Ansprüche 1 bis 3, wobei eine erste Vereinigung des ersten Teilsatzes von Dispersionskurven und des zweiten Teilsatzes von Dispersionskurven der Satz von Dispersionskurven ist und wobei eine zweite Vereinigung des ersten Teilsatzes von Tiefenfenstern (120a, d, f) und des zweiten Teilsatzes von Tiefenfenstern (120b, c, e) der Satz von Tiefenfenstern (120a-f) ist.

5. Das Verfahren nach einem der Ansprüche 1 bis 4, wobei das Dispersionsmodell ein theoretisches Dispersionsmodell ist.

6. Das Verfahren nach einem der Ansprüche 1 bis 5, wobei die Suche nach dem nächsten Nachbarn eine exakte lineare Suche ist.

7. Das Verfahren nach einem der Ansprüche 1 bis 6, wobei die zweite Frequenz größer als die erste Frequenz ist.

8. Das Verfahren nach einem der Ansprüche 1 bis 7, wobei die Gesteinseigenschaften eine Gesteinspermeabilität aufweisen.

9. Ein nichtflüchtiges, computerlesbares Medium, das Anweisungen speichert, die von einem Computerprozessor ausgeführt werden können, wobei die Anweisungen eine Funktionalität aufweisen für das:

Empfangen eines akustischen Datensatzes entlang eines Bohrlochs (20), das auf ein Kohlenwasserstoffreservoir (40) zugreift;

Bestimmen eines Satzes von Tiefenfenstern (120a-f) entlang des Bohrlochs (20); **dadurch gekennzeichnet, dass** die Anweisungen eine Funktionalität aufweisen für das:

Bestimmen eines ersten Teilsatzes von Dispersionskurven für einen ersten Teilsatz von Tiefenfenstern (120a, d, f) unter Verwendung eines Dispersionsmodells;

Initialisieren eines zweiten Teilsatzes von Dispersionskurven für einen zweiten Teilsatz von Tiefenfenstern (120b, c, e) unter Verwendung einer Suche nach dem nächsten Nachbarn des ersten Teilsatzes von Dispersionskurven;

Bestimmen von Langsamkeits-Frequenz-Paaren (110) für den zweiten Teilsatz von Tiefenfenstern (120b, c, e) unter Verwendung des akustischen Datensatzes;

Aktualisieren des zweiten Teilsatzes von Dispersionskurven unter Verwendung eines rekursiven Scanverfahrens, wobei das rekursive Scanverfahren folgende Schritte aufweist:

Bestimmen eines Langsamkeitsfensters (270) für eine zweite Frequenz, das zumindest teilweise auf einem Langsamkeitsabschnitt (245) und einer ersten Langsamkeit bei einer ersten Frequenz basiert, und

Bestimmen einer zweiten Langsamkeit bei der zweiten Frequenz unter Verwendung eines minimalen Langsamkeits-Frequenz-Paares bei der zweiten Frequenz innerhalb des Langsamkeitsfensters (270); und

Charakterisieren von Gesteinseigenschaften in der Nähe des Bohrlochs (20), basierend zumindest teilweise auf dem ersten Teilsatz von Dispersionskurven und dem zweiten Teilsatz von Dispersionskurven.

10. Das nichtflüchtige, computerlesbare Medium nach Anspruch 9, wobei der erste Teilsatz von Dispersionskurven und der zweite Teilsatz von Dispersionskurven Stoneley-Wellendispersionen repräsentieren, wobei eine erste Vereinigung des ersten Teilsatzes von Dispersionskurven und des zweiten Teilsatzes von Dispersionskurven ein Satz von Dispersionskurven ist und wobei eine zweite Vereinigung des ersten Teilsatzes von Tiefenfenstern (120a, d, f) und der zweiten Teilmenge von Tiefenfenstern (120b, c, e) der Satz von Tiefenfenstern (120a-f) ist.

11. Das nichtflüchtige, computerlesbare Medium nach einem der Ansprüche 9 bis 10, wobei das Dispersionsmodell ein theoretisches Dispersionsmodell ist.

12. Das nichtflüchtige, computerlesbare Medium nach einem der Ansprüche 9 bis 11, wobei die Suche nach dem nächsten Nachbarn eine exakte lineare Suche ist.

**13.** Das nichtflüchtige, computerlesbare Medium nach einem der Ansprüche 9 bis 12, wobei die zweite Frequenz größer als die erste Frequenz ist.

**14.** Ein System zum Modellieren eines Satzes von Dispersionskurven, aufweisend:

ein akustisches Werkzeug (50), das zum Sammeln eines akustischen Datensatzes konfiguriert ist; und
ein Computersystem (502), das konfiguriert ist zum:

Empfangen des akustischen Datensatzes entlang eines Bohrlochs (20), das auf ein Kohlenwasserstoffreservoir (40) zugreift,
Bestimmen eines Satzes von Tiefenfenstern (120a-f) entlang des Bohrlochs (20),
Bestimmen eines ersten Teilsatzes von Dispersionskurven für einen ersten Teilsatz von Tiefenfenstern (120a, d, f) unter Verwendung eines Dispersionsmodells,
wobei das System **dadurch gekennzeichnet ist, dass** es ferner konfiguriert ist, zum
Initialisieren eines zweiten Teilsatzes von Dispersionskurven für einen zweiten Teilsatz von Tiefenfenstern (120b, c, e) unter Verwendung einer Suche nach dem nächsten Nachbarn des ersten Teilsatzes von Dispersionskurven,
Bestimmen von Langsamkeits-Frequenz-Paaren (110) für den zweiten Teilsatz von Tiefenfenstern (120b, c, e) unter Verwendung des akustischen Datensatzes,
Aktualisieren des zweiten Teilsatzes von Dispersionskurven unter Verwendung eines rekursiven Scanverfahrens, wobei das rekursive Scanverfahren folgende Schritte aufweist:

Bestimmen eines Langsamkeitsfensters (270) für eine zweite Frequenz, das zumindest teilweise auf einem Langsamkeitsabschnitt (245) und einer ersten Langsamkeit bei einer ersten Frequenz basiert; und
Bestimmen einer zweiten Langsamkeit bei der zweiten Frequenz unter Verwendung eines minimalen Langsamkeits-Frequenz-Paares bei der zweiten Frequenz innerhalb des Langsamkeitsfensters (270), und

Charakterisieren von Gesteinseigenschaften in der Nähe des Bohrlochs (20), basierend zumindest teilweise auf dem ersten Teilsatz von Dispersionskurven und dem zweiten Teilsatz von Dispersionskurven.

**15.** Das System nach Anspruch 14, wobei der erste Teilsatz von Dispersionskurven und der zweite Teilsatz von Dispersionskurven Stoneley-Wellendispersionen repräsentieren, wobei eine erste Vereinigung des ersten Teilsatzes von Dispersionskurven und des zweiten Teilsatzes von Dispersionskurven der Satz von Dispersionskurven ist.


**Revendications**

**1.** Procédé de modélisation d'un ensemble de courbes de dispersion comprenant :

au moyen d'un système informatique
obtenir un ensemble de données acoustiques le long d'un puits (20) qui accède à un réservoir d'hydrocarbures (40) ; et
déterminer un ensemble de fenêtres de profondeur (120a-f) le long du puits (20) ;
déterminer un premier sous-ensemble de courbes de dispersion pour un premier sous-ensemble de fenêtres de profondeur (120a,d,f) en utilisant un modèle de dispersion ;

le procédé étant **caractérisé en ce qu'**il comprend, en outre ;

initialiser un second sous-ensemble de courbes de dispersion pour un second sous-ensemble de fenêtres de profondeur (120b,c,e) en utilisant une recherche du plus proche voisin du premier sous-ensemble de courbes de dispersion ;
déterminer des paires lenteur-fréquence (110) pour le second sous-ensemble de fenêtres de profondeur (120b,c,e) en utilisant l'ensemble de données acoustiques ;
mettre à jour le second sous-ensemble de courbes de dispersion en utilisant un procédé

de balayage récursif,

dans lequel le procédé de balayage récursif comprend :

déterminer une fenêtre de lenteur (270) pour une seconde fréquence sur la base, au moins en partie, d'un intercept de lenteur (245) et d'une première lenteur à une première fréquence, et
déterminer une seconde lenteur à la seconde fréquence en utilisant une paire lenteur-fréquence minimale à la seconde fréquence dans la fenêtre de lenteur (270) ; et

caractériser des propriétés de la roche à proximité du puits (20) sur la base, au moins en partie, du premier sous-ensemble de courbes de dispersion et du second sous-ensemble de courbes de dispersion.

2.  Procédé selon la revendication 1, comprenant, en outre :

identifier des parties prolifiques du réservoir d'hydrocarbures (40) sur la base, au moins en partie, des propriétés de la roche ; et
planifier et forer un puits de limite afin de poursuivre la récupération du réservoir d'hydrocarbures (40).

3.  Procédé selon la revendication 1 ou 2, dans lequel le premier sous-ensemble de courbes de dispersion et le second sous-ensemble de courbes de dispersion représentent des dispersions d'ondes de Stoneley.

4.  Procédé selon l'une quelconque des revendications 1 à 3, dans lequel une première union du premier sous-ensemble de courbes de dispersion et du second sous-ensemble de courbes de dispersion constitue l'ensemble de courbes de dispersion, et dans lequel une seconde union du premier sous-ensemble de fenêtres de profondeur (120a,d,f) et du second sous-ensemble de fenêtres de profondeur (120b,c,e) constitue l'ensemble de fenêtres de profondeur (120a-f).

5.  Procédé selon l'une quelconque des revendications 1 à 4, dans lequel le modèle de dispersion est un modèle de dispersion théorique.

6.  Procédé selon l'une quelconque des revendications 1 à 5, dans lequel la recherche du plus proche voisin est une recherche linéaire exacte.

7.  Procédé selon l'une quelconque des revendications 1 à 6, dans lequel la seconde fréquence est supérieure à la première fréquence.

8.  Procédé selon l'une quelconque des revendications 1 à 7, dans lequel les propriétés de la roche comprennent une perméabilité de la roche.

9.  Support lisible par ordinateur non transitoire stockant des instructions exécutables par un processeur informatique, les instructions comprenant une fonctionnalité pour :

recevoir un ensemble de données acoustiques le long d'un puits (20) qui accède à un réservoir d'hydrocarbures (40) ;
déterminer un ensemble de fenêtres de profondeur (120a-f) le long du puits (20) ;

**caractérisé en ce que** les instructions comprennent une autre fonctionnalité pour :

déterminer un premier sous-ensemble de courbes de dispersion pour un premier sous-ensemble de fenêtres de profondeur (120a,d,f) en utilisant un modèle de dispersion ;
initialiser un second sous-ensemble de courbes de dispersion pour un second sous-ensemble de fenêtres de profondeur (120b,c,e) en utilisant une recherche du plus proche voisin du premier sous-ensemble de courbes de dispersion ;
déterminer des paires lenteur-fréquence (110) pour le second sous-ensemble de fenêtres de profondeur (120b,c,e) en utilisant l'ensemble de données acoustiques ;
mettre à jour le second sous-ensemble de courbes de dispersion en utilisant un procédé de balayage récursif, dans lequel le procédé de balayage récursif comprend :

déterminer une fenêtre de lenteur (270) pour une seconde fréquence sur la base, au moins en partie, d'un intercept de lenteur (245) et d'une première lenteur à une première fréquence, et

déterminer une seconde lenteur à la seconde fréquence en utilisant une paire lenteur-fréquence minimale à la seconde fréquence dans la fenêtre de lenteur (270) ; et

caractériser des propriétés de la roche à proximité du puits (20) sur la base, au moins en partie, du premier sous-ensemble de courbes de dispersion et du second sous-ensemble de courbes de dispersion.

10. Support lisible par ordinateur non transitoire selon la revendication 9, dans lequel le premier sous-ensemble de courbes de dispersion et le second sous-ensemble de courbes de dispersion représentent des dispersions d'ondes de Stoneley, dans lequel une première union du premier sous-ensemble de courbes de dispersion et du second sous-ensemble de courbes de dispersion constitue un ensemble de courbes de dispersion, et dans lequel une seconde union du premier sous-ensemble de fenêtres de profondeur (120a,d,f) et du second sous-ensemble de fenêtres de profondeur (120b,c,e) constitue l'ensemble de fenêtres de profondeur (120a-f).

11. Support lisible par ordinateur non transitoire selon l'une quelconque des revendications 9 à 10, dans lequel le modèle de dispersion est un modèle de dispersion théorique.

12. Support lisible par ordinateur non transitoire selon l'une quelconque des revendications 9 à 11, dans lequel la recherche du plus proche voisin est une recherche linéaire exacte.

13. Support lisible par ordinateur non transitoire selon l'une quelconque des revendications 9 à 12, dans lequel la seconde fréquence est supérieure à la première fréquence.

14. Système de modélisation d'un ensemble de courbes de dispersion comprenant :

un outil acoustique (50) configuré pour collecter un ensemble de données acoustiques; et
un système informatique (502) configuré pour :

recevoir l'ensemble de données acoustiques le long d'un puits (20) qui accède à un réservoir d'hydrocarbures (40),
déterminer un ensemble de fenêtres de profondeur (120a-f) le long du puits (20),
déterminer un premier sous-ensemble de courbes de dispersion pour un premier sous-ensemble de fenêtres de profondeur (120a,d,f) en utilisant un modèle de dispersion,

le système étant **caractérisé en ce qu'**il est, en outre, configuré pour

initialiser un second sous-ensemble de courbes de dispersion pour un second sous-ensemble de fenêtres de profondeur (120b,c,e) en utilisant une recherche du plus proche voisin du premier sous-ensemble de courbes de dispersion,
déterminer des paires lenteur-fréquence (110) pour le second sous-ensemble de fenêtres de profondeur (120b,c,e) en utilisant l'ensemble de données acoustiques,
mettre à jour le second sous-ensemble de courbes de dispersion en utilisant un procédé de balayage récursif, dans lequel le procédé de balayage récursif comprend :

déterminer une fenêtre de lenteur (270) pour une seconde fréquence sur la base, au moins en partie, d'un intercept de lenteur (245) et d'une première lenteur à une première fréquence ; et
déterminer une seconde lenteur à la seconde fréquence en utilisant une paire lenteur-fréquence minimale à la seconde fréquence dans la fenêtre de lenteur (270), et

caractériser des propriétés de la roche à proximité du puits (20) sur la base, au moins en partie, du premier sous-ensemble de courbes de dispersion et du second sous-ensemble de courbes de dispersion.

15. Système selon la revendication 14, dans lequel le premier sous-ensemble de courbes de dispersion et le second sous-ensemble de courbes de dispersion représentent des dispersions d'ondes de Stoneley, dans lequel une première union du premier sous-ensemble de courbes de dispersion et du second sous-ensemble de courbes de dispersion constitue l'ensemble de courbes de dispersion.

FIG. 1B

FIG. 1A

FIG. 2A

FIG. 2B

FIG. 3

FIG. 4

FIG. 5

## REFERENCES CITED IN THE DESCRIPTION

**Patent documents cited in the description**

- US 10670761 B

**Non-patent literature cited in the description**

- **TANG** ; **CHENG**. Effects of a logging tool on the Stoneley waves in elastic and porous boreholes. *The Log Analyst*, 1993, vol. 34 (05)